# EUROPEAN PATENT SPECIFICATION

(11) **EP 1 008 885 B1**
(45) Date of publication and mention of the grant of the patent: **31.07.2002**
(21) Application number: 99830725.0
(22) Date of filing: 25.11.1999
(51) Int. Cl.: G02B 26/02, G09F 9/37, G02B 26/08

(54) **Electrostatically controlled optical device having a variable operative condition, particularly shutter or mirror**
Optische Anordnung, insbesondere Spiegel oder Verschlussvorrichtung, mit elektrostatischem Antrieb und variablem Betriebszustand
Dispositif optique à commande électrostatique, en particulier un miroir ou un obturateur, opérant entre différents états

(30) Priority: 09.12.1998 IT TO981029
(43) Date of publication of application: 14.06.2000
(73) Proprietor: C.R.F. Società Consortile per Azioni, 10043 Orbassano (TO) (IT)
(72) Inventor: Pizzi, Marco, 10043 Orbassano, Torino (IT); Perlo, Piero, 10043 Orbassano, Torino (IT); Sinesi, Sabino, 10043 Orbassano, Torino (IT); Lambertini, Vito, 10043 Orbassano, Torino (IT); Pullini, Daniele, 10043 Orbassano, Torino (IT); Koniachkine, Valerian, 10043 Orbassano, Torino (IT)
(74) Representative: Notaro, Giancarlo

(56) References cited:
- EP-A- 0 601 516
- DE-A- 3 047 495
- GB-A- 2 006 944
- US-A- 3 989 357
- US-A- 4 163 162

## Description

The present invention relates to an electrostatically controlled optical device having a variable operative state, and adapted in particular to act as shutter or mirror.

There have been already proposed in the past electrostatical motors of low power and small dimensions adapted for use as actuators in microelectronics technology applications, for actuating mechanical devices and the like in conditions subjected to vibrations such as in the automotive field. These electrostatical attuators make use of flexible films, also called cilia, or "petals", which are electrically conductive and each having one end associated to a stator and the opposite end adiacent to a translating element. The application of voltage pulses between the petals and one electrode associated with the translating element causes the adhesion by electrostatical effect of the petals to the translating element, with a resulting movement of the latter relative tothe stator.

An actuator of the above indicated type is disclosed for example in Dyatlov V. L., Konyaskin V.V., Potapov B. S. and Pyankov Yu. A., "Prospects of the employment of synchrotron radiation in film electrostatic actuator technology", Nuclear Instruments and Methods in Physics Research, A359 (1995), pages 394-395.

An electrostatically controlled optical device of the type indicated in the preamble of claim 1 is known from GB-A-2 006 944. Other similar devices are known from US-A-3 989 357, US-A-4 163 162 and DE-A-3 047 495.

The object of the present invention is that of proposing new and unique applications of electrostatically operating petals for providing optical elements having a variable operative state, such as shutters or mirrors with variable reflectance.

In view of achieving this object, the invention provides an optical device as set forth in claim 1.

Due to the above indicated features, it is thus possible to provide a plurality of optical elements having a variable operative state, with relatively simple means and such that anyway precision and reliability of operation is insured even in applications subjected to vibrations, such as in the automotive field.

Further features and advantages of the invention will become apparent from the description which follows with reference to the annexed drawings, given purely by way of non limiting example, in which:
figures 1, 2 are cross-sectional views of a first embodiment of the device not forming part of the invention, in two different operative conditions,
figure 3 is a diagram which shows the way by which the device of figures 1, 2 is controlled,
figures 4, 5 are perspective views which show two different operative conditions of a second embodiment which also does not form part of the invention,
figure 6 is a cross-sectional view taken along line VI-VI of figure 5,
figures 7, 8 are cross-sectional views which show the device of the invention in two different operative conditions,
figure 9 is diagram showing the way by which the device of figures 7, 8 is controlled,
figures 10, 11 are cross-sectional views which show two different operative conditions of a further embodiment which also does not form part of the invention, and
figures 12, 13 are cross-sectional views which show two different operative conditions of a further embodiment also not forming part of the invention.

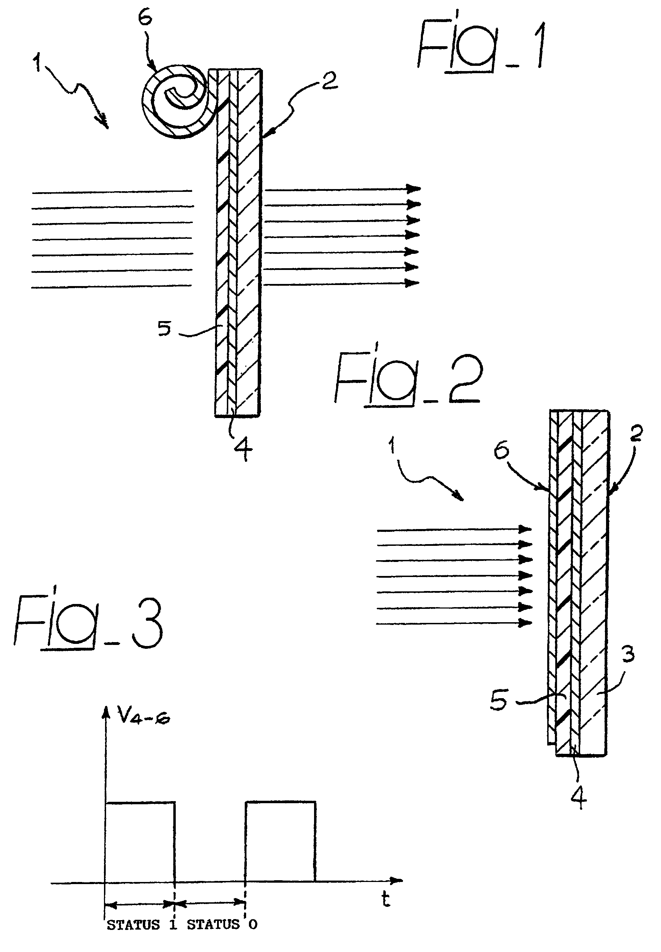

Figures 1, 2 show a first embodiment of an optical device which does not form part of the invention, in shutter form. The device, generally designated by reference numeral 1, comprises a fixed support 2 including a substrate 3 constituted by a sheet of glass or plastics, which is transparent to light, having a thickness of a few millimeters or centimeters. On the surface of substrate 3 there is applied, by evaporation or spin-coating or screen-printing or dipping a layer 4 of conductive material which is transparent to light, having a thickness of a few tens or hundreds of nanometers. Subsequently, the conductive layer 4 is insulated by a layer 5 of dielectric or ferroelectric insulating material which is transparent to light, whose thickness may vary from 0.1 micrometers to a few tens of micrometers. This layer may be obtained by screen-printing or spin-coating or dipping. Reference numeral 6 designates the movable part of the device which is constituted by a dielectric film with a thickness of a few microns, with a metal coating on one side (petal). Alternatively, the petal may be comprised of a single metal film. The film is secured at one end to the surface of the substrate so that the metal part is in contact with the substrate. An elastic film is used which in the underformed condition is rolled in a curled shape, as shown in figure 1. The dimensions of the film may vary depending upon the type of shutter which is required. By applying the electric voltage between the petal 6 and the electrode 4 which is transparent to light, the petal 6 lays down over the surface of substrate 3 (figure 2) thus preventing passage of light rays L (state 1). If however the electric voltage between the petal 6 and the electrode 4 is zero, the film is rolled on itself due to its own elasticity thus enabling light L to pass (state 0). The diagram of figure 3 shows the variation of the voltage between electrode 4 and petal 6 with the time.

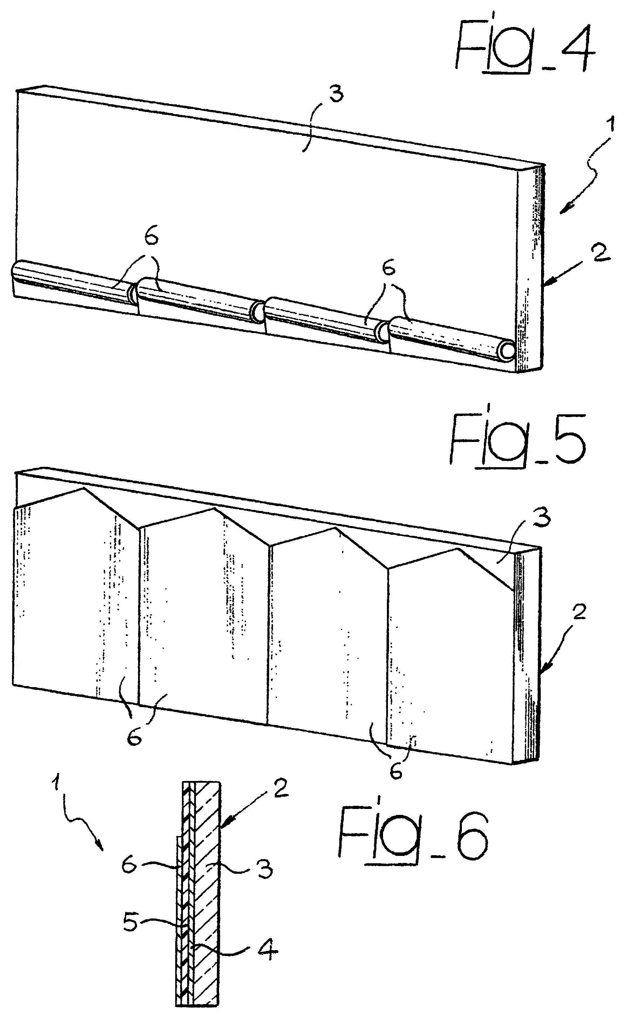

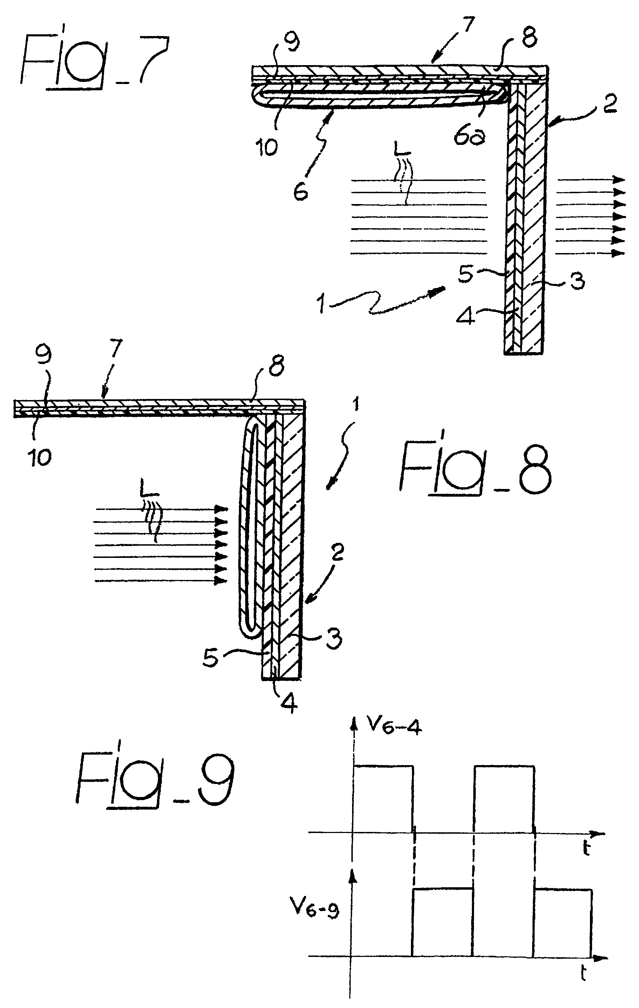

To provide shutters of large dimensions and different shapes it is possible to use many petals together (as shown in figures 4, 5 with reference to a second embodiment). It is further possible to have a progressive passage from state 0 to state 1 by separately supplying voltage to the various petals and providing a partition of the electrodes.

Figures 4, 5, 6 show a second embodiment not forming part of the invention which substantially corresponds to the embodiment of figures 1, 2, except for that in this case the device is used as a mirror with variable reflectance. In these figures, the parts in common to those of figures 1, 2 are designated with the same reference numeral. Also in this case the device 1 comprises a fixed support 2 including a substrate 3, an electrode 4 and an insulating layer 5. The techniques which are used to provide these layers and the thickness thereof are identical with those indicated in the foregoing with reference to figures 1, 2. However, in this case the electrode 4 is constituted by a material which is semi-transparent to light. Finally, many petals 6 are provided arranged side-by-side which have an undeformed condition rolled in a curled shape (figure 4) which may be caused to lay down over substrate 3, in a way similar to that provided in the embodiment of figures 1, 2, by application of voltage pulses between the electrode and the petals. In this case the petals are constituted by dielectric films with a thickness of a few micrometers, with a metal coating on one side, or by fully metal films which are made by evaporation, having a thickness between 0.5 and 2 micrometers. When the petals lay down over substrate 3, they transform the device into a mirror which totally reflects the light coming from the side opposite to that on which the petals are applied. When the petals are in the curled condition shown in figure 4, the mirror is semi-reflective, due to layer 4. A possible application of this device is that of motor-vehicle rear-view mirrors which may be switched between a fully reflective condition and a partially reflective condition which avoids dazzling due to the headlamps of the vehicles which follow.

Figures 7, 8 show the device according to the invention, which relates to a shutter with a first fixed support 2, a second fixed support 7 and a movable part 6. The first fixed support 2 includes a substrate 3 constituted by a sheet of glass or plastics which is transparent to light and with a thickness of a few millimeters or centimeters. On the surface of the substrate there is applied, by evaporation, spin-coating, screen-printing or dipping, a layer 4 of conductive material which is transparent to light, having a thickness of a few tens or hundreds of nanometers. Subsequently, the conductive layer 4 is insulated with a layer 5 of dielectric or ferroelectric insulating material which is transparent to light, whose thickness may vary between 0.1 micrometers and a few tens of micrometers. This layer may be obtained by screen-printing or spin-coating or dipping.

The second fixed support 7 is arranged orthogonally to the first fixed support 2 and includes a base 8 made of alumina or steel on which a second electrode 9 is applied which can be comprised of a metal sheet with a thickness of a few millimeters or a layer of conductive material made by screen-printing or dipping or spin-coating or evaporation. Also the second electrode 9 is insulated by screen-printing or spin-coating or dipping with a layer of a dielectric or ferroelectric insulating material, whose thickness may vary between 0.1 micrometers and a few tens of micrometers.

The movable part is constituted by a petal 6 made from a dielectric film with a thickness of a few microns, with a metal coating on one side, or constituted by a single metal layer. The film is bent on itself in an endless fashion, and flattened so as to form a double layer with one end 6a adhering to the first fixed support 2 on one side and the second fixed support 7 on the other side. The metal part of the petal 6 is arranged at the outside of the endless shape. The dimensions and shape of the film may vary depending upon the type of shutter which is required. It is possible to use petals with the metal part located inside the endless shape, in which case the two electrodes 4, 9 have not to be insulated by layers 5, 10.

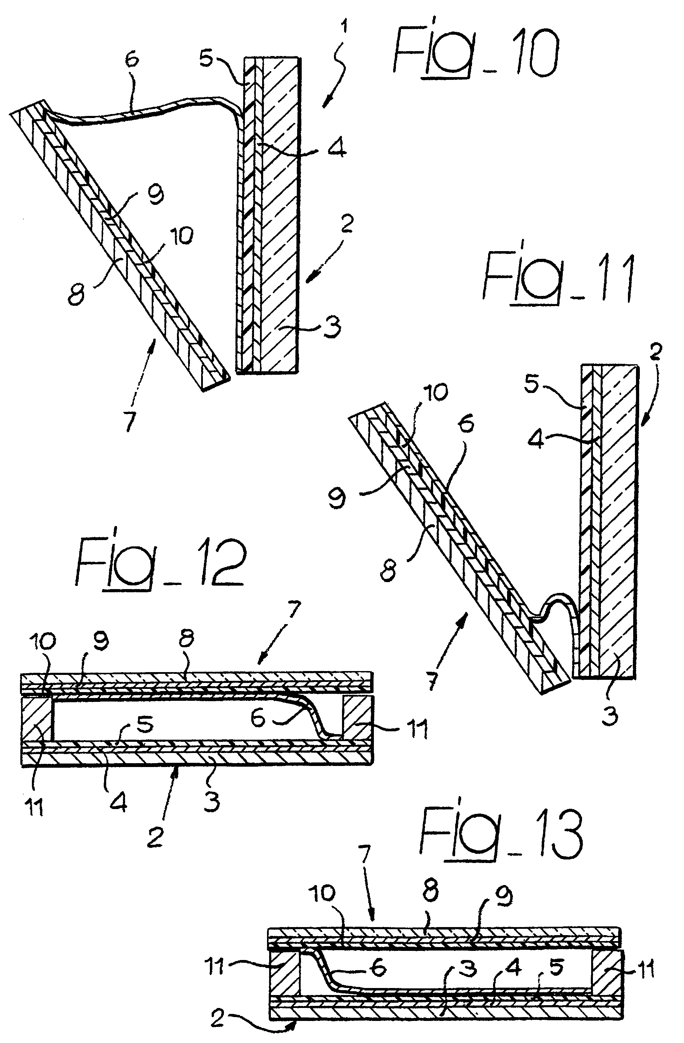

By applying an electric voltage between the petal 6 and the electrode 4 which is transparent to light, the film lays down over the surface of substrate 3 preventing passage of light (state 1). If however electric voltage is applied between petal 6 and the second electrode 9, the film lays down over the surface of second electrode 9 thus inabling the passage of light (state 0). This operation is also shown in the diagram of figure 9 which shows the variation with time of the voltage between petal 6 and electrode 4 and voltage between petal 6 and electrode 9.

In order to provide shutters of large dimensions and different shapes, it is possible to use many petals together. It is further possible to have a progressive passage from state 0 to state 1 by separately supplying voltage to different petals and providing a partion of the electrodes.

Figures 10, 11 show a variant of the device of figures 7, 8 which relate to the application as a mirror with variable reflectance. In this case, the second fixed support 7 is arranged so as to form an angle θ relative to the first fixed support 2. In figures 10, 11, the parts in common to those of figures 7, 8 are designated with the same reference numerals. The various layers of the device of figures 10, 11 are obtained with technologies and dimensions similar to what is provided for the device of figures 7, 8, except for that in this case the first electrode 4 is of a material which is semi-transparent to light.

Petal 6, which is constituted by a dielectric film with a thickness of a few microns and a metal coating on one side, or a fully metal film, is secured at one end to the first support 2 and at the other end to the second support 7. The dimensions and shapes of film may vary depending upon the type of mirror which is required. By applying an electric voltage between petal 6 and electrode 4, which is semi-transparent to light, the film lays down over the surface of the substrate 3 thus rendering the substrate fully reflective. If, however, electric voltage is applied between petal 6 and the second electrode 9, the film 6 lays down over the surface of the second electrode 9 and the substrate becomes a partially reflective mirror.

In order to provide mirrors with variable reflectance of large dimensions and different shapes it is possible to use many petals together. It is also possible to choose a desired degree of reflectance by separately supplying voltage to the various petals or providing a partion of the electrodes.

The insulating layer 10 may have a surface which is structured so as to have anti-reflective features when the petal lays down thereon.

Figures 12, 13 show two different operative conditions of a variant of the device of figures 10, 11, in which the two supports 2, 7 are parallel to each other, with spacer elements 11 interposed therebetween.

Naturally, while the principle of the invention remains the same, the details of construction and the embodiments may widely vary with respect to what has been described and shown purely by way of example, without departing from the scope of the invention.

## Claims

1. Electrostatically controlled optical device having a variable operative state, in particular shutter or mirror, comprising:
- a fixed support (2), including:
- a substrate (3), comprised of a sheet of transparent material,
- at least a first electrode (4) comprised of a thin film of electrically conductive material, which is at least partially transparent and applied to one face of the sheet forming the substrate (3),
- a dielectric or ferroelectric insulating film (5), applied over the film (4) forming said first electrode, and
- a movable petal (6) comprising a thin film of electrically conductive material, having only one end portion rigidly connected to said insulating film (5) and adapted to assume a first operative condition, in which it fully adheres, by electrostatical effect, to said insulating film (5), when an electric voltage is applied between said first electrode (4) and said petal (6), so as to activate a first operative state of said optical device, and
means for biassing said electrostatical petal (6) towards a second operative position, in which it is spaced from said fixed support (2), when voltage is not applied between said first electrode (4) and said petal (6), so as to activate a second operative state of said optical device,
wherein said means for biassing the petal (6) towards its second operative position are comprised of a second fixed support (7), spaced from the first fixed support (2) and carrying the second electrode (9), means being provided for supplying an electric voltage between said petal (6) and the second electrode (9), so as to cause said petal (6) to adhere to said second fixed support (7) when the electric supply between the petal (6) and the first electrode (4) is interrupted,
**characterized in that** said second fixed support (7) is comprised of a sheet orthogonal to the sheet (3) forming the first fixed support (2), and
**in that** the electrostatical petal (6) is constituted by a film bent in an endless fashion and flattened so as to form a double layer, with one end (6a) anchored to the first fixed support (2) on one side and the second fixed support (7) on the other side.

2. Optical device according to claim 1, **characterized in that** said petal (6) acts as a shutter adapted to prevent passage of light through said fixed support (2), said insulating layer (4) being also transparent.

## Patentansprüche

1. Optische Anordnung mit elektrostatischem Antrieb und variablem Betriebszustand, insbesondere Verschlussvorrichtung (bzw. Blende) oder Spiegel, umfassend:
- einen festen Träger (2) mit
- einem Substrat (3), gebildet aus einem Blatt eines transparenten Materials,
- mindestens einer ersten Elektrode (4), gebildet aus einem dünnen Film elektrisch leitfähigen Materials, welches zumindest teilweise transparent und auf eine Seite des das Substrat (3) bildenden Blattes aufgebracht ist,
- einem dielektrischen oder ferroelektrischen isolierenden Film (5), der über dem Film (4), der die erste Elektrode bildet, aufgebracht ist,
sowie
- einem beweglichen Blatt (6), umfassend einen dünnen Film eines elektrisch leitfähigen Materials, welches nur in einem Endbereich starr mit der genannten Isolierschicht (5) verbunden und dazu ausgelegt ist, einen ersten Betriebszustand anzunehmen, in dem es durch elektrostatische Wirkung voll an der genannten Isolierschicht (5) anhaftet, wenn eine elektrische Spannung zwischen der genannten ersten Elektrode (4) und dem genannten Blatt (6) angelegt wird, um einen ersten Betriebszustand der genannten optischen Anordnung zu aktivieren, und
- Mittel zur Beeinflussung des genannten elektrostatischen Blatts (6) in einen zweiten Betriebszustand, in dem es von dem genannten festen Träger (2) entfernt ist, wenn keine Spannung zwischen der genannten ersten Elektrode (4) und dem genannten Blatt (6) angelegt wird, um einen zweiten Betriebszustand der genannten optischen Anordnung zu aktivieren,
wobei
die genannten Mittel zur Beeinflussung des Blatts (6) in seinen zweiten Betriebszustand einen zweiten festen Träger (7) umfassen, der sich in einem Abstand vom ersten festen Träger (2) befindet und die zweite Elektrode (9) trägt,
wobei die Mittel zur Lieferung einer elektrischen Spannung zwischen dem genannten Blatt (6) und der zweiten Elektrode (9) bereitgestellt werden, um ein Anheften des genannten Blatts (6) an dem zweiten festen Träger (7) zu bewirken, wenn der Strom zwischen dem Blatt (6) und der ersten Elektrode (4) unterbrochen wird,
**dadurch gekennzeichnet, daß**
der zweite feste Träger (7) ein zu dem Blatt (3), welches den ersten festen Träger (2) bildet, orthogonales Blatt umfasst und daß das elektrostatische Blatt (6) gebildet wird durch einen gebogenen Film in Endlosform, der so zusammengedrückt wird, daß er eine Doppelschicht bildet, wobei ein Ende (6a) an dem ersten festen Träger (2) an einer Seite und der zweite feste Träger (7) an der anderen Seite befestigt ist.

2. Optische Anordnung nach Anspruch 1 **dadurch gekennzeichnet, daß** das genannte Blatt (6) als Verschlußvorrichtung bzw. Blende dient, die dazu ausgelegt ist, den Lichtdurchgang durch den genannten festen Träger (2) zu verhindern, wobei die Isolierschicht (4) ebenfalls transparent ist.

## Revendications

1. Dispositif optique commandé électrostatiquement présentant un état de fonctionnement variable, en particulier obturateur ou miroir, comprenant :
un support fixe (2) incluant :
un substrat (3) qui est constitué par une feuille de matériau transparent,
au moins une première électrode (4) qui est constituée par un film mince de matériau électriquement conducteur, qui est au moins partiellement transparente et qui est appliquée sur une face de la feuille qui forme le substrat (3),
un film d'isolation diélectrique ou ferroélectrique (5) qui est appliqué sur le film (4) qui forme ladite première électrode, et
un pétale mobile (6) qui comprend un film mince de matériau électriquement conducteur, qui a seulement une partie d'extrémité qui est connectée de façon rigide audit film isolant (5) et qui est adaptée pour prendre une première condition de fonctionnement selon laquelle elle adhère pleinement par effet électrostatique audit film isolant (5), lorsqu'une tension électrique est appliquée entre ladite première électrode (4) et ledit pétale (6), de façon à activer un premier état de fonctionnement dudit dispositif optique ; et
un moyen pour pousser ledit pétale électrostatique (6) en direction d'une seconde position de fonctionnement selon laquelle il est espacé dudit support fixe (2), lorsqu'une tension n'est pas appliquée entre ladite première électrode (4) et ledit pétale (6), de façon à activer un second état de fonctionnement dudit dispositif optique,
dans lequel ledit moyen pour pousser le pétale (6) en direction de sa seconde position de fonctionnement est constitué par un second support fixe (7) qui est espacé du premier support fixe (2) et qui supporte une seconde électrode (9), un moyen étant prévu pour appliquer une tension électrique entre ledit pétale (6) et la seconde électrode (9), pour faire en sorte que ledit pétale (6) adhère audit second support fixe (7) lorsque la tension électrique qui est appliquée entre le pétale (6) et la première électrode (4) est interrompue,
**caractérisé en ce que** :
ledit second support fixe (7) est constitué par une feuille qui est orthogonale à la feuille (3) qui forme le premier support fixe (2) ; et **en ce que** :
le pétale électrostatique (6) est constitué par un film incurvé d'une façon sans fin et aplati de façon à former une couche double, une extrémité (6a) étant ancrée au premier support fixe (2) sur un côté et au second support fixe (7) sur l'autre côté.

2. Dispositif optique selon la revendication 1, **caractérisé en ce que** ledit pétale (6) opère en tant qu'obturateur qui est adapté pour empêcher le passage d'une lumière au travers dudit support fixe (2), ladite couche isolante (4) étant également transparente.
